# EUROPEAN PATENT SPECIFICATION

(11) **EP 1 188 162 B1**
(45) Date of publication and mention of the grant of the patent: **04.07.2012**
(21) Application number: 00937256.6
(22) Date of filing: 15.06.2000
(51) Int. Cl.: G11B 20/10

(54) **DATA TRANSFER APPARATUS AND DATA TRANSFER METHOD WITH DOUBLE BUFFERING**
DATENÜBERTRAGUNGSVORRICHTUNG UND DATENÜBERTRAGUNGSVERFAHREN MIT DOPPELPUFFER
APPAREI DE TRANSFERT DE DONNÉES ET PROCÉDÉ DE TRANSFERT DE DONNÉES UTILISANT DEUX TAMPONS

(30) Priority: 16.06.1999 JP 17032599
(43) Date of publication of application: 20.03.2002
(73) Proprietor: Sony Computer Entertainment Inc., Tokyo 107-0052 (JP)
(72) Inventor: YAMANOUE, Kaoru, Sony Computer Entertainment Inc., Tokyo 107-0052 (JP)
(74) Representative: DeVile, Jonathan Mark
(86) International application number: PCT/JP2000/003915
(87) International publication number: WO 2000/077786

(56) References cited:
- JP-A- 09 116 828
- US-A- 4 378 594
- US-A- 4 901 615
- US-A- 5 854 910
- US-A- 5 861 879
- US-A- 5 895 122

## Description

### Technical Field

The present invention relates to a data transfer apparatus, a data transfer system, and a data transfer method which use buffer memories for transferring data from a data transfer source to a data transfer destination.

### Background Art

In recent years, secondary storage devices such as CD-ROMs (Compact Disk Read-Only Memories), hard disks, etc. have their storage capacity greatly increased for storing a large amount of data such as music sound data.

Processors capable of generating highly expressive music sound data on a real-time basis are available for easy use.

It is also possible for users to obtain music sound data via a network or a public circuit system.

Music sound data thus obtained are transferred directly, i.e., not as compressed data, from a secondary storage device, a processor, or a public circuit system to a music sound data playback device, which reproduces the music sound data continuously on a real-time basis.

In order for the music sound data playback device to reproduce the music sound data continuously on a real-time basis, the music sound data playback device performs a double-buffer memory process which employs FIFO (first-in first -out) memories or divided memory areas of a RAM (Random-Access Memory).

According to the double-buffer memory process, when one of two buffer memories is full of data, the data is read from the buffer memory to start reproducing music sound data, for example, and before the reading of the data from the buffer memory ends, data are transferred to the other buffer memory until it is full of data. When the buffer memory which is being read becomes empty, the reading of the data is switched to the other buffer memory. In this manner, the stored data can be read continuously from the buffer memories to allow music sound data, for example, to be reproduced continuously.

The conventional double-buffer memory process incorporates an interrupt process for indicating the empty state of one of the buffer memories to a processor such as a CPU (Central Processing Unit) as a data transfer source.

However, the interrupt process is problematic in that it poses a large burden on the processor because the interrupt process needs to be performed after register data and various items of information in the processor have to be temporarily saved.

In order to output data according to the double-buffer memory process, it is necessary for one of the buffer memories to be full of data in an initial data transfer stage so that the outputted data will not be interrupted. For executing a first playback session quickly in response to a playback command, the buffer memories should preferably be of as small a storage capacity as possible. With the buffer memories being of a small storage capacity, however, the interrupt process is required to be performed more frequently, posing a greater burden on the processor.

US 4378594 provides a memory which is divided into two parts, so that a substantially continuous printing operation can be carried out by reading information to be printed from one part of the memory, with printing being interrupted for brief periods of time to permit writing of information in the other part of the memory. The writing into the memory is done on an alternate line basis, with the omitted lines being filled during a subsequent write operation so as to convert the interlace input to a standard format. At an appropriate time, the two parts of the memory are switched so that the read-out for the printing is carried out from the part into which information has just been written, and the writing takes place in the part of the memory which has been cleared during the preceding read operation.

### Disclosure of Invention

Accordingly, the present invention provides an apparatus and method as defined in the appended claims. Such an approach can help to reduce the number of times that an interrupt process is carried out, thereby substantially reducing a burden on a processor as a data transfer source.

In one embodiment, since the data transfer destination processor switches one of the two buffer memories to the writing memory and the other of the two buffer memories to the reading memory, the number of interrupts that occur to the data transfer source processor can be reduced, thus reducing the burden on the data transfer source processor.

The size of data transferred in one cycle may be a predetermined data size rather than the data size that is large enough to make the buffer memory full.

Each of the two buffer memories may comprise a plurality of buffer memories to allow the principles of the invention to find a wider range of applications.

The transferred data may comprise music sound data.

In one embodiment, a music sound processor switches one of two buffer memories to the writing memory and the other of the two buffer memories to the reading memory. The number of interrupts that occur to the host processor can be reduced, thus reducing the burden on the host processor.

Inasmuch as the transfer of the data to the buffer memories is primarily controlled by an output processor, the burden on a host processor for the transfer of the data is reduced.

In the above method, the data may comprise music sound data. ously without interruption.

The size of data transferred in one cycle may be a predetermined data size rather than the data size that is large enough to make the buffer memory full.

Each of the two buffer memories may comprise a plurality of buffer memories to allow the principles of the invention to find a wider range of applications.

The transferred data may comprise music sound data.

A data transfer system according to the present invention includes a bus, a host processor connected to the bus, a music sound processor connected to the bus, and substantially two buffer memories which can be switched alternately between writing and reading memories, the buffer memories being connected to the music sound processor, the arrangement being such that music sound data are transferred from the host processor via the bus and the music sound processor to the buffer memories, the music sound processor comprising means for switching one of the two buffer memories to the writing memory and the other of the two buffer memories to the reading memory, and controlling reading of data from and writing of data into the two buffer memories, when the host processor sends an instruction to start transfer data to the music sound processor.

With the above arrangement, since the music sound processor switches one of the two buffer memories to the writing memory and the other of the two buffer memories to the reading memory, the number of interrupts that occur to the host processor can be reduced, thus reducing the burden on the host processor.

The music sound processor may comprise means for specifying one of the buffer memories which is not the reading memory as the writing memory and sending a data transfer request to the host processor when the instruction to start transfer data is sent from the host processor, writing data in the buffer memory specified as the writing memory until the buffer memory becomes full and thereafter waiting until the buffer memory specified as the reading memory becomes empty when the data are transferred from the host processor, sending a data transfer request to the host processor, switching the buffer memories between the reading and writing memories, and controlling reading of data from and writing of data into the buffer memories when the buffer memory specified as the reading memory becomes empty, and continuously controlling reading of data from and writing of data into the buffer memories until an entire size of the transferred data has been written. The music sound processor can perform a data reading process continuously without interruption.

In the data transfer system, the size of data transferred in one cycle may be a predetermined data size rather than the data size that is large enough to make the buffer memory full.

In the data transfer system, each of the two buffer memories may comprise a plurality of buffer memories to allow the principles of the invention to find a wider range of applications.

The plurality of buffer memories may store left and right stereophonic music sound data.

A data transfer system according to the present invention includes a bus, a host processor connected to the bus, a music sound processor connected to the bus, and substantially two buffer memories which can be switched alternately between writing and reading memories, the buffer memories being connected to the music sound processor, the arrangement being such that music sound data are transferred from the music sound processor via the bus to the host processor, the music sound processor comprising means for switching one of the two buffer memories to the writing memory and the other of the two buffer memories to the reading memory, and controlling reading of data from and writing of data into the two buffer memories, when data are transferred to the host processor.

With the above arrangement, data can be transferred from the music sound processor to the host processor with a reduced number of interrupts.

The music sound processor may comprise means for, before writing of data into one of the buffer memories is finished, completing reading of data from the other buffer memory and transferring the read data to the host processor, and starting to write data in the other buffer memory which is empty when the writing of data into the one of the buffer memories is finished. The transfer of the data from the music sound processor to the buffer memories is not interrupted. Since the music sound processor mainly controls the transfer of the data, the burden on the host processor for the transfer of the data is reduced.

According to the present invention, there is also provided a method of transferring data in a data transfer system having a bus, a host processor connected to the bus, an output processor connected to the bus, substantially two buffer memories and an output device connected to the output processor, comprising the steps of transferring data from the host processor to the output processor until one of the buffer memories becomes full of the data, thereafter, temporarily suspending transfer of the data, reading data from the other of the buffer memories with the output processor and outputting the read data from the output processor to the output device, when the other buffer memory become empty, setting the other buffer memory as a transfer destination memory and canceling temporary suspension of the transfer of data, and resuming the transfer of the data from the host processor to the other buffer memory.

With the above method, inasmuch as the transfer of the data to the buffer memories is primarily controlled by the output processor, the burden on the host processor for the transfer of the data is reduced.

In the above method, the data may comprise music sound data.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a block diagram of a data recording and reproducing apparatus according to an embodiment of the present invention;
FIG. 2 is a flowchart of an operation sequence of the data recording and reproducing apparatus shown in FIG. 1;
FIG. 3 is a diagram showing data stored in a main memory in the order in which the data have been transferred;
FIG. 4 is a diagram showing data stored in the main memory in respective channels;
FIG. 5 is a diagram of a reference tag representing readout address for data stored in respective channels;
FIG. 6 is a detailed flowchart of an automatic DMA transfer process in the operation sequence shown in FIG. 2;
FIG. 7 is a diagram showing one of buffer memories that is full of data;
FIG. 8 is a diagram showing data stored in the buffer memory, illustrative of a data transfer reading process;
FIG. 9 is a flowchart of an operation sequence according to a comparative example;
FIG. 10 is a diagram showing a basic process for transferring data to a buffer memory and reading dada from the buffer memory;
FIG. 11 is a block diagram of a data recording and reproducing apparatus according to another embodiment of the present invention;
FIG. 12 is a diagram illustrative of a data transfer reproducing process of the data recording and reproducing apparatus shown in FIG. 11;
FIG. 13 is a flowchart of the data transfer reproducing process of the data recording and reproducing apparatus shown in FIG. 11 ;
FIG. 14 is a diagram illustrative of a multi-channel data transfer process in a data transfer order format according to still another embodiment of the present invention;
FIG. 15 is a diagram illustrative of a multi-channel data transfer process in a reference tag format according to yet another embodiment of the present invention;

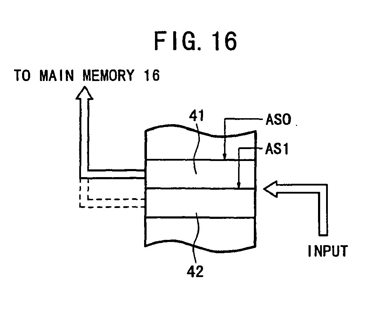

FIG. 16 is a diagram illustrative of a process for transferring data from a buffer memory to a main memory; and
FIG. 17 is a diagram illustrative of a process for transferring a number of data from a buffer memory to a main memory.

### Best Mode for Carrying Out the Invention

One embodiment of the present invention will be exemplified with reference to accompanying drawings.

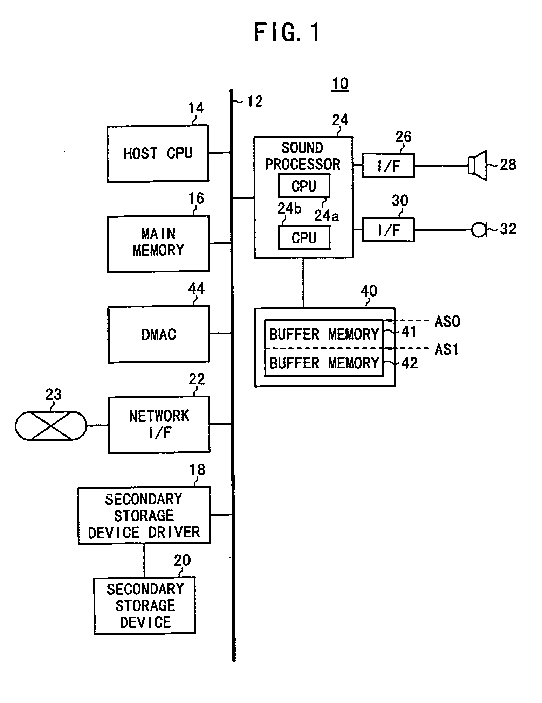

FIG. 1 shows in block form a data recording and reproducing apparatus 10 according to an embodiment of the present invention.

As shown in FIG. 1, the data recording and reproducing apparatus 10 has a bus 12 to which there is connected a host CPU (host processor) 14 for controlling the data recording and reproducing apparatus 10 in its entirety. The host CPU 14 serves as a data transfer source processor or a data transfer destination processor.

To the bus 12, there are also connected a main memory 16 comprising a DRAM (Dynamic Random-Access Memory) and a secondary storage device 20 such as a hard disk or the like via a secondary storage device drive 18.

A public circuit system 23 is connected to the bus 12 via a network interface 22. Other networks (not shown) are also connected to the bus 12. Data can be supplied to and from the data recording and reproducing apparatus 10 using the public circuit system 23 and the other networks.

To the bus 12, there is further connected a sound processor or sound processing unit (SPU) 24 which is a sound music processor that functions as a data transfer destination processor and also as a data transfer source processor. The sound processor 24 has two CPUs 24a, 24b for controlling the sound processor 24 in its entirety.

The sound processor 24 also has, in addition to the two CPUs 24a, 24b, a ROM storing a control program, etc., a working RAM, a counter, a timer, a DAC (Digital-to-Analog Converter), and an ADC (Analog-to-Digital Converter). The sound processor 24 is capable of transferring data and generating music sound data.

A speaker 28 as a sound output device (output unit) is connected to the sound processor 24 via an interface 26, and a microphone 32 as a sound input device (input unit) is connected to the sound processor 24 via an interface 30. Therefore, the sound processor 24 also functions as an input/output processor.

To the sound processor 24, there is also connected a buffer memory 40 as a double buffer which comprises two buffer memories 41, 42 controlled for data reading and writing by the sound processor 24. The buffer memories 41, 42 may comprise divided memory areas of a single memory as shown in FIG. 1, or may comprise independent two memories. Therefore, the buffer memory 40 may comprise virtually two buffer memories. The divided buffer memories 41, 42 are also referred to as channels 41, 42, respectively.

Each of the buffer memories 41, 42 may further be divided into a plurality of memories for driving a four-channel speaker system, for example.

Each of the buffer memories 41, 42 has a storage capacity capable of 256 words each of 16 bits/word. The buffer memories 41, 42 have respective leading memory addresses AS1, AS1. Actually, the buffer memories 41, 42 have a storage capacity of at least 512 words as they functions as a local memory for the sound processor 24.

The CPU 24a of the sound processor 24 writes data into one of the buffer memories, e.g., the buffer memory 41, and the other CPU 24b reads data from the other buffer memory, i.e., the buffer memory 42.

In order to prevent the reading of data from the buffer memory 40 from being interrupted, when the buffer memory 42 becomes empty after the buffer memory 41 has become full of data, the CPU 24a reads the data from the buffer memory 41, and the CPU 24b starts writing data into the empty buffer memory 42.

The CPUs 24a, 24b write data into the buffer memory 40 more quickly than they read data from the buffer memory 40. In this manner, the sound processor 24 can read data from and writes data in the buffer memory 40 in a parallel processing on a real-time basis without interrupting the reading of data from the buffer memory 40.

More specifically, when the sound processor 24 outputs sounds from the speaker 28, in order that data are read uninterruptedly from the buffer memory 41 or 42 by the CPU 24a or 24b, i.e., in order to reproduce the data continuously, data are written into the other buffer memory 42 or 41 by the other CPU 24b or 24a more quickly than data are read therefrom.

When sounds are entered from the microphone 32, in order that data are written uninterruptedly into the buffer memory 41 or 42, i.e., in order to record the data continuously, data are read from the other buffer memory 42 or 41 more quickly than data are written thereinto.

A DMAC (Direct Memory Access Controller) 44 is connected to the bus 12 for directly transferring data between the secondary storage device 20 and the main memory 16 or between the main memory 16 and the buffer memory 40 of the sound processor 24.

The DMAC 44 normally functions as a data transfer source processor for data transfer between the main memory 16 and the buffer memory 40, and also functions as a data transfer destination processor when necessary.

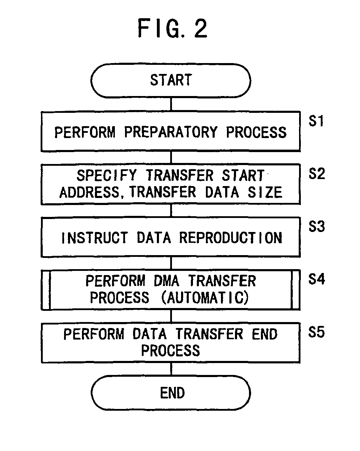

A data transfer process for transferring data, whose overall size is 2560 words, from a host memory, i.e., the main memory 16, to a local memory, i.e., the buffer memory 40, in the data recording and reproducing apparatus 10 will be described below with reference to FIG. 2. In this data transfer process, after data start being transferred from the main memory 16 to the buffer memory 40, upon elapse of a very short period of time, i.e., when the buffer memory 40 becomes fully of data, the speaker 28 starts outputting sounds of 2560 words without interruption.

Since the DMAC 44 has a data transfer capacity of 32 words per cycle from the main memory 16 to the buffer memory 40, a total of (2560 words/32 words = 80) data transfer cycles are carried out to transfer 2560 words.

First, the host CPU 14 performs a preparatory process for data transfer in step S1. In the preparatory process, the host CPU 14 reads 2560 words of data {music sound data (sound data)}, from which batches of 256 words are to be successively transferred via the sound processor 24 alternately to the buffer memories 41, 42, from the secondary storage device 20, and transfers the 2560 words to the main memory 16 where they are written in a predetermined order.

The data read from the secondary storage device 20 include data stored in the secondary storage device 20 in advance or data supplied from the public circuit system 23 via the network interface 22 to the secondary storage device 20.

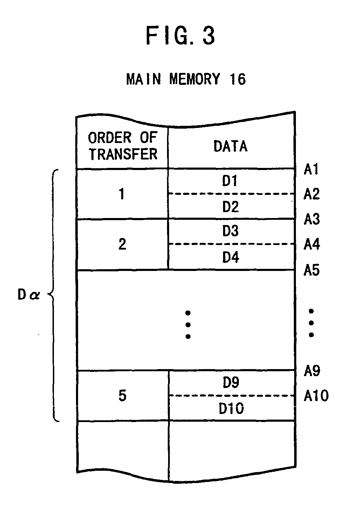

For writing the data from the secondary storage device 20 into the main memory 16, as shown in FIG. 3, data Dn to be transferred to the buffer memories 41, 42 are divided into 10 batches each of 256 words (Dn = D1, D2, ..., D10), and these batches of data are written as data Dα successively into leading addresses A1 A10 of the main memory 16 in the order in which they are transferred.

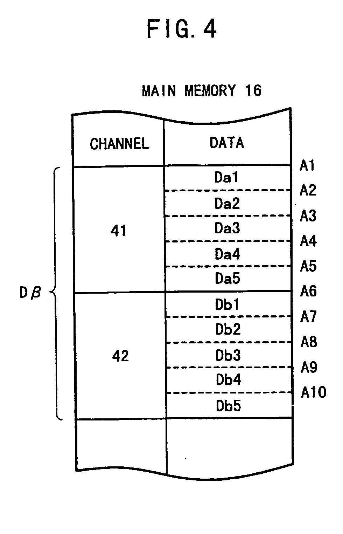

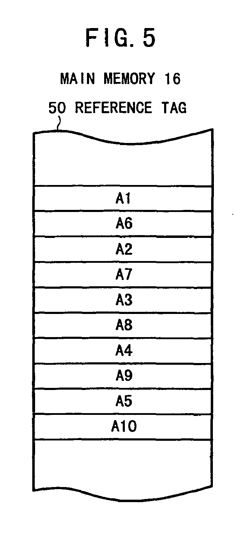

Alternatively, as shown in FIG. 4, data Dn to be transferred to the buffer memories 41, 42 are written in the main memory 16 as sequential data Dβ in respective channels together with a reference tag 50 (see FIG. 5) storing leading addresses indicative of the order in which the data are transferred.

More specifically, according to a transfer order format shown in FIG. 3, data D1 of 256 words are stored in an address A1, data D2 of 256 words are stored in an address A2, successive data are stored in successive addresses, and finally data D10 of 256 words are stored in an address A10.

In this manner, the data Dα are written in the main memory 16 in the order in which they are transferred (in FIG. 3, the data are transferred in the order 1 - 5).

According to a reference tag format shown in FIGS. 4 and 5, data Da1 - Da5, Db1 - Db5 each of 256 words that are sequential for the channels 41, 42 are written respectively in memory addresses A1 - A10, and an order for reading the data Da1 Da5, Db1 - Db5 {leading addresses (data) A1, A6, A2, ..., A5, A10} is written in the reference tag 50 in advance.

In this manner, the data which are to be transferred from the DMAC 44 via the sound processor 24 to the buffer memory 40 for being outputted as music sounds (voice sounds) from the speaker 28 are stored in a desired format, i.e., the transfer order format or the reference tag format, in the main memory 16.

After the above preparatory process, the host CPU 14 indicates a transfer start address, i.e., the address A1 and a full transfer data size, i.e., 2560 words, to the DMAC 44, and sets the number of data transfer cycles, i.e., (32 words × 8 = 256 words) × 10 = 80, in the DMAC 44 in step S2.

In step S3, the host CPU 14 instructs the sound processor 24 to reproduce the data stored in the main memory 16.

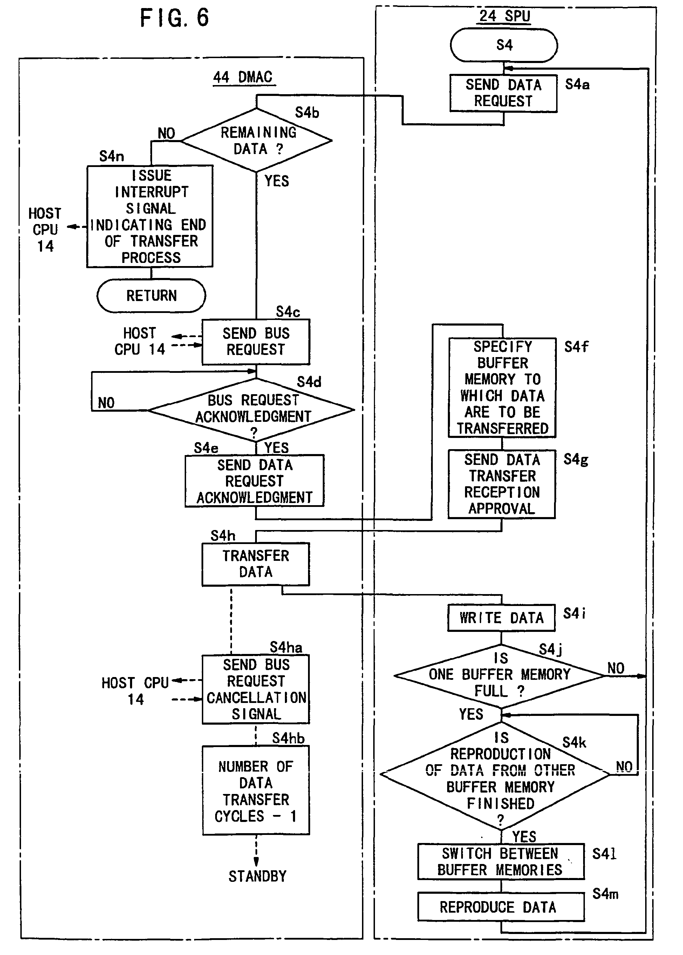

An automatic DMA transfer process carried out by the DMAC 44 in step S4 will be described in detail with reference to FIG. 6.

FIG. 6 shows the automatic DMA transfer process which is divided into an operation sequence, shown on the right side, carried out by the sound processor 24 and an operation sequence, shown on the left side, carried out by the DMAC 44.

In the automatic DMA transfer process, the CPU 24a of the sound processor 24 sends a data request to the DMAC 44 in step S4a.

In response to the data request, the DMAC 44 confirms a remaining-data transfer size from the present number of data transfer cycles in step S4b. Since no data transfer has started yet, the-number of data transfer cycles is 80.

In step S4c, the DMAC 44 sends a bus request signal to request the host CPU 14 to give a permission to use the bus 12 exclusively.

In response to the bus request signal, the host CPU 14 temporarily stops the present process as if it is interrupted, saves register data, etc., and thereafter sends a bus request acknowledgment permitting the exclusive use of the bus 12 to the DMAC 44. The bus 12 is now brought into a high-impedance floating state by the host CPU 14.

The DMAC 44 which has received the bus request acknowledgment in step S4d sends a data request acknowledgment for the data request issued in step S4a to the sound processor 24 in step S4e.

In response to the data request acknowledgment, the sound processor 24 specifies either one of the buffer memories 41, 42 to which data are to be transferred, i.e., specifies the buffer memory 41 which has been set to receive transferred data at first, in step S4f. In step S4g, the sound processor 24 sends a data transfer reception approval to the DMAC 44.

In step S4h, the DMAC 44 starts transferring first 256 words of data (the data D1 shown in FIG. 3 or the data Da1 shown in FIG. 4) stored in the address A1 to the sound processor 24.

If the data stored in the main memory 16 comprise the data Dα arranged in the data transfer order as with the data Dn shown in FIG. 3, then the first 32 words of data, of 256 words of data D1 from the address A1, are transferred.

Alternatively, if the reference tag 50 and the sequential data Dβ are stored in the main memory 16 as shown FIGS. 4 and 5, then the reference tag 50 is referred to, and first 32 words of data, of 256 words of data Da1 from the address A1, are transferred.

When the transfer of the first 32 words of data to the sound processor 24 is finished, the DMAC 44 sends a bus request cancellation signal to the host CPU 14 in step S4ha.

In response to the bus request cancellation signal, the host CPU 14 transfers the right to use the bus 12 to itself.

In step S4hb, the DMAC 44 changes the number of data transfer cycles from 80 to 79 (the number of data transfer cycles - 1).

When the first 32 words of data have been transferred to the sound processor 24, the sound processor 24 writes the transferred 32 words of data in an address AS0 of the buffer memory 41 in step S4i.

In step S4j, the sound processor 24 confirms whether the buffer memory 41 which is presently writing data therein is full of data or not, i.e., whether the buffer memory 41 stores 256 words of data or not.

Since the buffer memory 41 is not full of data at the present time, control goes back to step S4a, and the sound processor 24 sends a data request for next 32 words of data to the DMAC 44.

As described above, the DMAC 44 confirms a remaining data transfer size from the present number of data transfer cycles in step S4b. Because the number of data transfer cycles is 79 at this time, the DMAC 44 sends a bus request signal to the host CPU 14 in step S4c and confirms a bus request acknowledgment in step S4d. In step S4e, the DMAC 44 sends a data request acknowledgment for the data request issued in step S4a to the sound processor 24.

In step S4f, the sound processor 24 specifies a buffer memory to which data are to be transferred. At this time, since the first 256 words of data are still being transferred and the buffer memory 41 remains to be specified, the sound processor 24 sends a data transfer reception approval to the DMAC 44.

In step S4h, the DMAC 44 transfers next 32 words of data from the data D1, if the data Dα are transferred, or next 32 words of data from the data Da1 if the data Dβ are transferred, to the sound processor 24.

In step S4i, the sound processor 24 writes the transferred 32 words of data in an address next to the address where the 32 words of data have already been stored in the buffer memory 41.

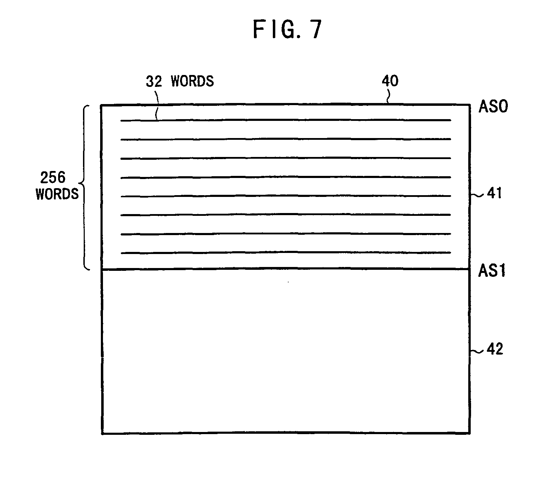

When the processing in step S4a - step S4j has been repeated 8 times, the buffer memory 41, which is a storage area having the leading address AS0 of the buffer memory 40, stores 256 words (32 words × 8) of data under the control of the CPU 24a, as shown in FIG. 7, and is full of the data D1 or Da1. At this time, the next leading address of the buffer memory 40 for data writing is set to AS1.

Then, in step S4k, the CPU 24a confirms whether the reproduction of the data in the buffer memory 42 under the control of the CPU 24b is finished or not, i.e., whether the other buffer memory 42 is empty or not.

At this time, no data reproduction has started yet, and the other buffer memory 42 is empty.

When the sound processor 24 confirms that the other buffer memory 42 is empty, the sound processor 24 switches between a data transfer memory (data writing memory) and a data reproduction memory (data reading memory) in step S41.

Specifically, the sound processor 24 changes the buffer memory 41 from a memory to write data in to a memory to read data from, and also changes the buffer memory 42 from a memory to read data from to a memory to write data in.

After the memory switching, the CPU 24a starts reproducing (reading) the data from the memory 41 in step S4m. Specifically, the CPU 24a successively reads data from the address AS0 of the buffer memory 41, and sends the data via the interface 26 to the speaker 28, which reproduces voice sounds (music sounds).

While music sounds are being reproduced by the speaker 28 under the control of the CPU 24a, the CPU 24b sends a data request again to the DMAC 44 in step S4a.

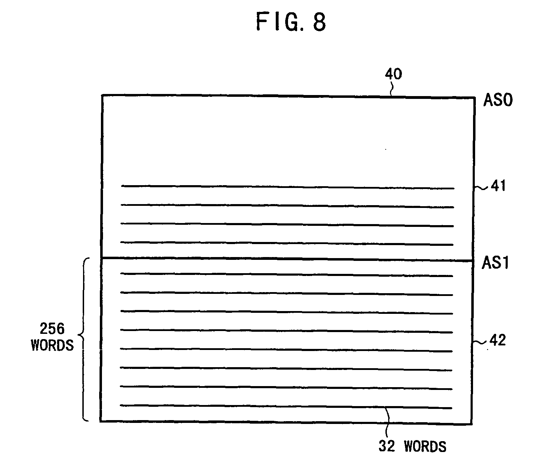

When the processing in step S4a - step S4j has been repeated 8 times, data D2 of 256 words from the address A2, of the data Dα shown in FIG. 3, or data Db1 of 256 words from the address A6 shown in FIG. 4, are stored in the buffer memory 42 from the address AS1 as shown in FIG. 8, whereupon the buffer memory 42 becomes full of the data.

The data are written into the buffer memory 42 by the CPU 24b more quickly than the data are read from the buffer memory 41 by the CPU 24a such that data remain in the buffer memory 41 while it is being read when the buffer memory 42 becomes full of the data, as shown in FIG. 8.

Therefore, the CPU 24b that has operated to write the data into the buffer memory 42 is placed in the wait state at the time the condition in step S4j is satisfied.

If the reproduction of music sounds based on the data read from the buffer memory 41 is finished in step S4k, the sound processor 24 switches between the data transfer memory (data writing memory) and the data reproduction memory (data reading memory) in step S41. The buffer memory 42 which has been made full of data now becomes the data reproduction memory, and the CPU 24b reads and reproduces the data from the buffer memory 42. At this time, the buffer memory 41 serves as the data transfer memory.

When the sound processor 24 sends an 81st data request to the DMAC 44, the DMAC 44 determines that all the data Dα or Dβ have been eliminated (no remaining data exists) in step S4b, and then issues an interrupt signal to end transferring the 2560 words of data to the host CPU 14 in step S4n.

In step S5 shown in FIG. 2, the host CPU 14 then performs a data transfer end process for erasing the data Dα or Dβ from the main memory 16 and also erasing the reference tag 50 from the main memory 16.

In the above embodiment, as described above, when 2560 words of data are transferred from the host CPU 14 to the sound processor 24, the interrupt to end data transfer, i.e., the processing in step S4n, occurs only once. Consequently, the processing burden on the host CPU 14 is greatly reduced.

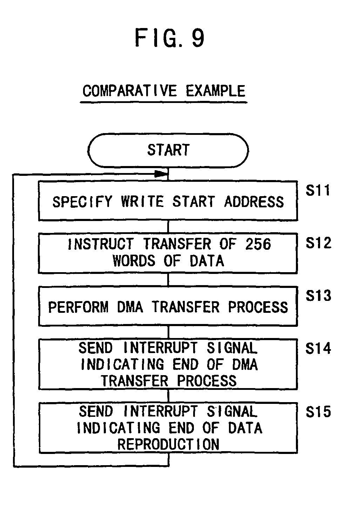

A comparative example of the number of interrupts that occur when 2560 words of data are transferred from the main memory 16 to the buffer memory 40 according to a DMA transfer process, which is not the automatic DMA transfer process, to reproduce music sounds with the sound processor 24 will be described below with reference to FIG. 9.

In the comparative example, the host CPU 14 indicates a write start address, e.g., the leading address SA0 of the buffer memory 41, to the sound processor 24 in step S11.

In step S12, the host CPU 14 instructs the DMAC 44 to transfer 256 words of data to the sound processor 24.

In step S13, the DMAC 44 transfers 256 words of data to the sound processor 24. At this time, the DMAC 44 sends a bus request signal to request the host CPU 14 and also sends a bus request cancellation signal to the host CPU 14 each time 32 words of data are transferred, i.e., sends 8 bus request signals and 8 bus request cancellation signals while transferring the 256 words of data to the sound processor 24. The transfer of the 256 words of data to write them in the buffer memory 41, i.e., the DMA transfer, is now brought to an end.

When the DMA transfer is ended, the DMAC 44 sends an interrupt signal indicative of the end of the DMA transfer to the host CPU 14 in step S14.

The host CPU 14 now performs an interrupt process.

While and after the 256 words of data are transferred and written in the processing in step S11 to step S13, the sound processor 24 reads the data from the other buffer memory 42, and reproduces music sounds through the speaker 28.

When the reading of the 256 words of data from the other buffer memory 42 is ended, the sound processor 24 sends an interrupt signal indicative of the end of the reading of the 256 words of data to the host CPU 14 in step S15.

The host CPU 14 performs an interrupt process again at this time.

Thereafter, the host CPU 14 indicates again a write start address, e.g., the leading address SA1 of the buffer memory 42, to the sound processor 24 in step S11.

In the comparative example, as described above, the processing in step S11 - step S14 is repeated ten times until the reproduction of the 2560 words of music sound data with the sound processor 24 is ended.

In the comparative example, accordingly, while the 2560 words of data are being reproduced, a total of 20 interrupts (10 interrupts in step S14 and 10 interrupts in step S15) occur to the host CPU 14.

Therefore, the processing burden on the host CPU 14 for data transfer is very large.

In the data transfer process according to the above embodiment, as described above with reference to FIG. 6, when one of the buffer memories of the double-buffer memory 40 becomes empty, music sound data in the other buffer memory is not transferred according to an interrupt process.

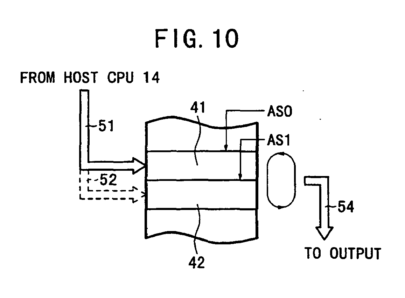

Specifically, as shown in FIG. 10, when music sound data are transferred from the host CPU 14 as a data transfer source, the host CPU 14 and the DMAC 44, as a data transfer source processor, handle a data size of 2560 words which is greater than the storage capacity of 256 words of the buffer memory 41 (42). The sound processor 24, as a data transfer destination processor, temporarily suspends data transfer after music sound data have been transferred to the buffer memory 41 until it becomes full according to a data transfer process 51. When music sound data in the other buffer memory 42 are reproduced by the sound processor 24 and the buffer memory 42 becomes empty according to a data reproduction transfer process (output transfer process) 54, the sound processor 24 sets the empty buffer memory 42 as a data destination memory. The sound processor 24 then cancels the temporary suspension of data transfer, and resumes a data transfer process 52 to transfer music sound data to the empty buffer memory 42. Since the sound processor 24 switches between the buffer memories 41, 42, the host CPU 14 is not required to perform burdensome interrupt processes, and can carry out the data transfer process uninterruptedly.

In the above embodiment, therefore, after data transfer is instructed, 2560 words of data can be reproduced and transferred between the DMAC 44 and the sound processor 24 by only a handshake process for data requests, and after the transfer of the 2560 words of data is ended, only one interrupt signal to end transferring the 2560 words of data is sent from the DMAC 44 to the host CPU 14.

Consequently, the data transfer process according to the above embodiment is more advantageous than the data transfer process of the comparative example in that the interrupt process performed by the host CPU 14 is reduced to 1/20.

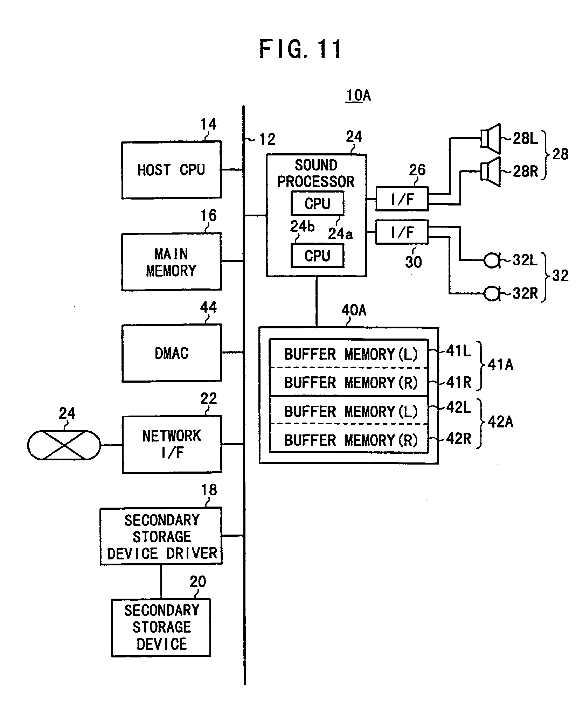

FIG. 11 shows in block form a data recording and reproducing apparatus 10A according to another embodiment of the present invention, for recording and reproducing stereophonic data as music sound data. Those parts of the data recording and reproducing apparatus 10A which are identical to those of the data recording and reproducing apparatus 10 shown in FIG. 1 are denoted by identical reference characters, and will not be described in detail.

The data recording and reproducing apparatus 10A includes a buffer memory 40A comprising four buffer memories 41L, 41R, 42L, 42R each having a storage capacity of 256 words. The buffer memories 41L, 41R jointly make up a buffer memory 41A, and the buffer memories 42L, 42R jointly make up a buffer memory 42A. The buffer memory 40A thus has two buffer memories 41A, 42A which can alternately be switched for reading and writing data.

To the sound processor 24, there are connected a right speaker 28R and a left speaker 28L as a sound output device via an interface 26. The speakers 28R, 28L are collectively referred to as a speaker 28.

To the sound processor 24, there are also connected a right microphone 32R and a left microphone 32L as a sound input device via an interface 30. The microphones 32R, 32L are collectively referred to as a microphone 32.

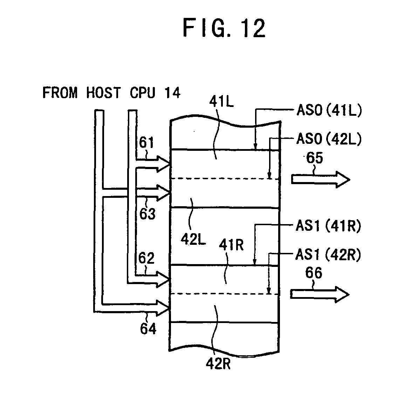

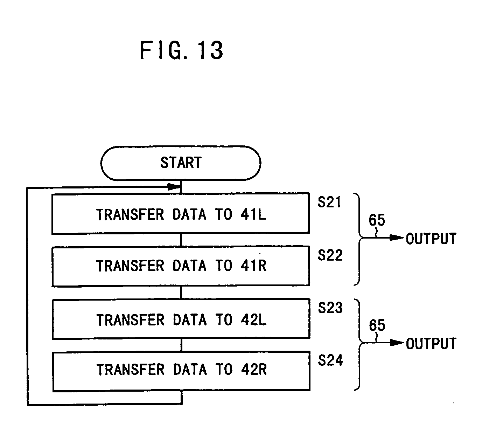

Operation of the data recording and reproducing apparatus 10A will be described below with reference to FIGS. 12 and 13 which show a data transfer reproducing process for reproducing stereophonic music sound data.

In step S21 shown in FIG. 13, 256 words of data are transferred from the main memory 16 to a leading address AS0 (41L) of the buffer memory 41L according to a data transfer process 61. In step S22, 256 words of data are transferred from the main memory 16 to a leading address AS1 (41R) of the buffer memory 41R according to a data transfer process 62.

In a reproducing transfer process 65, the data are simultaneously read from the buffer memory 41L and the buffer memory 41R, and outputted from the speakers 28L, 28R. While in the reproducing transfer process 65, 256 words of data are transferred from the main memory 16 to a leading address AS0 (42L) of the buffer memory 42L according to a data transfer process 63 in step S23, and 256 words of data are transferred from the main memory 16 to a leading address AS1 (42R) of the buffer memory 42R according to a data transfer process 64 in step S24.

After the reproducing transfer process 65 (see FIG. 13), or stated otherwise when the buffer memories 41L, 41R become empty, a next reproducing transfer process 66 begins. In the next reproducing transfer process 66, the data are simultaneously read from the buffer memory 42L and the buffer memory 42R, and outputted from the speakers 28L, 28Rr.

Before the reproducing transfer process 66 ends, 256 words of data are transferred again from the main memory 16 to the leading address AS0 (41L) of the buffer memory 41L according to the data transfer process 61 in step S21, and 256 words of data are transferred again from the main memory 16 to the leading address AS1 (41R) of the buffer memory 41R according to the data transfer process 62 in step S22.

The above processing is repeated to intermittently transfer and continuously reproduce stereophonic music sound data.

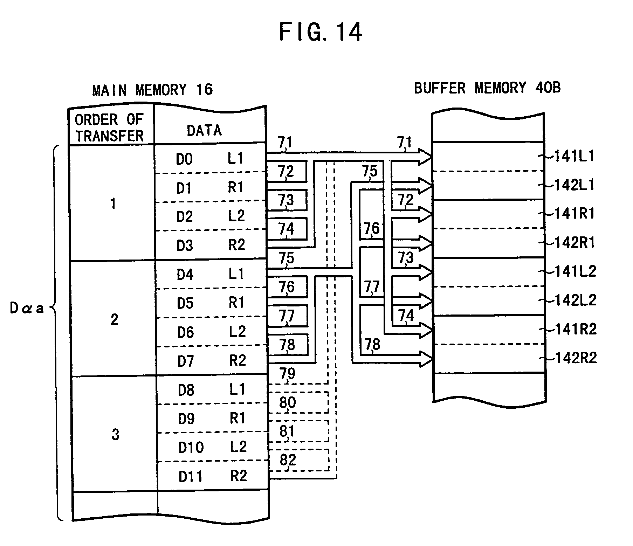

FIG. 14 is illustrative of a multi-channel data transfer process in a data transfer order format according to still another embodiment of the present invention. In FIG. 14, data Dαa (data D0 **-** D11) for a four-channel speaker system (channels L1, R1, L2, R2) which are stored in the main memory 16 are transferred to and continuously reproduced from a buffer memory 40B which comprises buffer memories 141L1, 141R1, 141L2, 141R2 and buffer memories 142L1, 142R1, 142L2, 142R2.

In FIG. 14, data D0, D1, D2, D3, which are first data to be transferred, are transferred from the main memory 16 and written successively into the buffer memories 141L1, 141R1, 141L2, 141R2 according to respective data transfer processes 71, 72, 73, 74 in the order named.

The data D0, D1, D2, D3 are then simultaneously read from the buffer memories 141L1, 141R1, 141L2, 141R2, and outputted as music sounds from four speakers (not shown) according to a data reproduction transfer process.

Before the data reproduction transfer process ends, data D4, D5, D6, D7, which are second data to be transferred, are transferred from the main memory 16 and written successively into the buffer memories 142L1, 142R1, 142L2, 142R2 according to respective data transfer processes 75, 76, 77, 78 in the order named.

When the buffer memories 141L1, 141R1, 141L2, 141R2 from which the data D0, D1, D2, D3 have been simultaneously read become empty, the data D4, D5, D6, D7 are simultaneously read from the buffer memories 142L1, 142R1, 142L2, 142R2, so that the data reproduction transfer process is carried out uninterruptedly.

When the buffer memories 141L1, 141R1, 141L2, 141R2 become empty according to respective data transfer processes 79, 80, 81, 82 in the order named, data D8, D9, D10, D11 are written successively into the empty buffer memories 141L1, 141R1, 141L2.

In this manner, the data can be transferred in a multiplicity of channels.

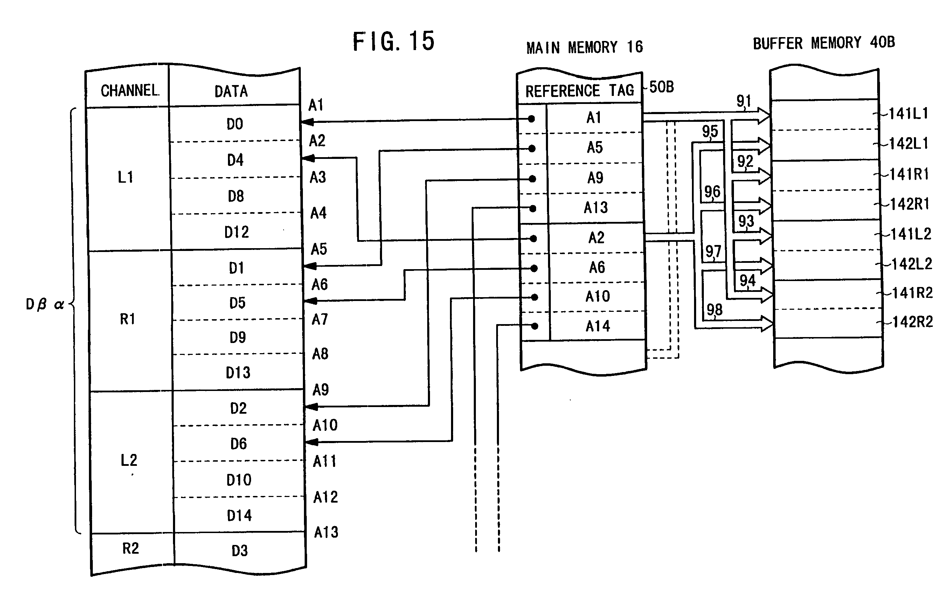

FIG. 15 illustrates a multi-channel data transfer process in a reference tag format according to yet another embodiment of the present invention. In the multi-channel data transfer process shown in FIG. 15, data similar to the data D0 D12 shown in FIG. 14 are transferred using a reference tag 50B. In the reference tag format, data Dβα comprising sequential data D0**,** D4, D8, D12, D1 D5, D9, D13, D2, D6, D10, D14, D3 each of 256 words in channels L1**,** R1, L2, R2 are written in leading memory addresses A1 - A13 in advance, and the order in which to read the data is written in the reference tag 50B in advance.

In FIG. 15, first through fourth addresses A1, A5, A9, A13 of the reference tag 50B are referred to, and data D0, D1, D2, D3 are written successively into the buffer memories 141L1, 141R1, 141L2, 141R2 according to data transfer processes 91, 92, 93, 94.

Then, the data D0, D1, D2, D3 are simultaneously read from the buffer memories 141L1, 141R1, 141L2, 141R2, and reproduced.

Before the reproduction of the data D0, D1, D2, D3 is finished, fifth through eighth addresses A2, A6, A10, A14 of the reference tag 50B are referred to, and data D4, D5, D6, D7 are written successively into the buffer memories 142L1, 142R1, 142L2, 142R2 according to data transfer processes 95, 96, 97, 98.

When the simultaneously reading of the data D0, D1, D2, D3 from the buffer memories 141L1, 141R1, 141L2, 141R2 is finished, the data D4, D5, D6, D7 start being simultaneously read from the buffer memories 142L1, 142R1, 142L2, 142R2. At the same time, ninth through twelfth addresses of the reference tag 50B are referred to, and data D8, D9, D10, D11 start being written successively into the buffer memories 141L1, 141R1, 141L2, 141R2.

In this manner, the data can be transferred and reproduced in a multiplicity of channels, using the reference tag 50B.

With respect to the data recording and reproducing apparatus 10, 10B shown in FIGS. 1 and 11, the process of continuously reproducing data from the main memory 16 with the buffer memory 40 and the speaker 28 has been described. In the data recording and reproducing apparatus 10, 10B, when music sounds are inputted from the microphone 32 or the like as the sound input device or when music sound data are generated by the sound processor 24, 256 words of music sound data may be written into the buffer memory 41, and data may be transferred from the buffer memory 42 more quickly than the 256 words of music sound data are written into the buffer memory, 41 according to an automatic DMA transfer process.

The data transfer from the sound processor 24 as the sound music processor to the host CPU 14 will be described in greater detail below. In FIG. 1, before the writing of data into one of the buffer memories 41, 42, e.g., the buffer memory 41, is finished, the sound processor 24 completes the reading of data from the other buffer memory 42 and transfers the read data to the host CPU 14 as the host processor. When the writing of data into the buffer memory 41 is finished, the sound processor 24 starts writing data into the other buffer memory 42 which is now empty. Therefore, the data transfer or the data input from the sound processor 24 to the buffer memory 40, i.e., the buffer memory 41 or the buffer memory 42, is not interrupted.

When data are transferred from the sound processor 24 to the host CPU 14, since the data transfer to the buffer memory 40 is mainly controlled by the sound processor 24, the burden imposed on the host CPU 14 for the transfer process is very small.

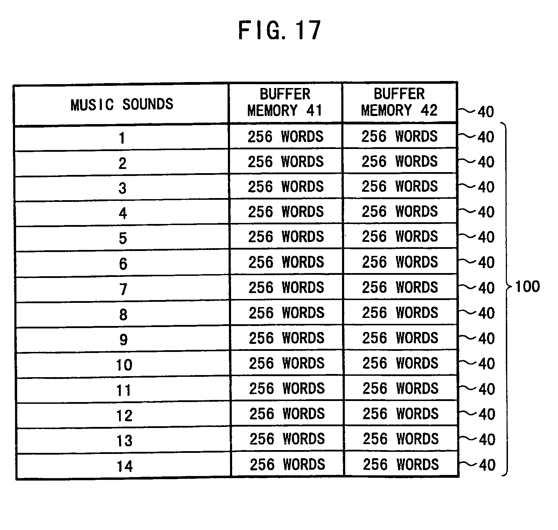

Actually, as shown in FIG. 17, there is available a memory area 100 capable of storing music sound data corresponding to 14 double-buffer memories 40 each comprising the buffer memories 41, 42 each having a storage capacity of 256 words, i.e., a memory area 100 for 512 words × 14 = 7168 words.

According to an automatic DMA transfer process for transferring data from the sound processor 24 to the host CPU 14, when all of the 14 buffer memories 41, for example, of the double-buffer memories 40 become full of music sound data generated by the sound processor 24, the sound processor 24 sends a data transfer request to the DMAC 44 to continuously write data into the other 14 buffer memories 42.

Each time a data transfer request is received, the DMAC 44 transfers the data in the entire memory area 100 of the buffer memories 40 to the main memory 16. Therefore, since the data being recorded in the 14 buffer memories 42 by the sound processor 24 are simultaneously transferred to the main memory 16, when a data transfer request is issued, the sound processor 24 specifies leading addresses of the buffer memories 41 which have already been full of written data, and issues an interrupt signal to the DMAC 44 for each specified leading address.

In this fashion, the data generated by the sound processor 24 can be transferred to the main memory 16 with a minimum number of interrupts.

According to the present invention, as described above, inasmuch as the data transfer destination processor alternately switches the buffer memories for reading and writing data, the number of interrupts issued to the data transfer source processor can be reduced to lower the burden on the data transfer source processor.

Furthermore, because the music sound processor alternately switches the buffer memories for reading and writing data, the number of interrupts issued to the host processor can be reduced to lower the burden on the host processor.

Moreover, data can be transferred from the music sound processor to the host processor with a minimum number of interrupts.

Although certain preferred embodiments of the present invention have been shown and described in detail, it should be understood that various changes and modifications may be made therein without departing from the scope of the appended claims.

## Claims

1. An apparatus for transferring data, comprising:
a data transfer source processor (14) connected to a memory (16) through a bus (12);
a memory controller (44) connected to said bus;
first and second buffer memories (41, 42) which can be switched alternately between writing and reading memories; and
a data transfer destination processor (24) connected to said bus;
the apparatus being configured such that when the data transfer source processor sends an instruction to start transferring data from said memory (16) to said data transfer destination processor in order to reproduce the data stored in the memory (16), the data transfer source processor sets a data transfer cycle value representing the number of data transfer cycles to be performed, and said data transfer destination processor specifies the first buffer memory to be a writing memory into which data is transferred from the memory (16), and the second buffer memory to be a reading memory from which data is reproduced, and controls reading of data from and writing of data into said first and second buffer memories by writing a predetermined size of data into the writing memory and thereafter waiting until the reading memory becomes empty, and when the reading memory becomes empty, switching the first and second buffer memories between being the writing memory and the reading memory, such that said first and second buffer memories are switched alternately between being the writing memory and the reading memory as long as there remain data transfer cycles to be performed;
and wherein said memory controller is configured to send an interrupt signal to said data transfer source processor when the number of data transfer cycles that has been performed is equal to said data transfer cycle value.

2. The apparatus of claim 1, wherein the apparatus is configured to:
transfer data from said memory (16) to said data transfer destination processor until the writing memory becomes full of the data;
thereafter, temporarily suspend transfer of the data;
read data from the reading memory with the data transfer destination processor and output the read data from the data transfer destination processor to an output device (28);
when the reading memory become empty, switch the first and second buffer memories between the reading and writing memories, and cancel temporary suspension of the transfer of data; and
resume the transfer of the data from said memory (16) to the new writing memory.

3. An apparatus according to claim 1 or 2, wherein each of said first and second buffer memories comprises a plurality of buffer memories (41L), (41R), (42L), (42R).

4. An apparatus according to any one of claims 1 to 3, wherein said data transfer destination processor (24) comprises a music sound processor (24), and said transferred data comprise music sound data.

5. An apparatus according to any one of claims 1 to 3, further comprising said bus (12), and wherein:
said data source processor comprises a host processor (14) connected to said bus;
said data transfer destination processor comprises a music sound processor (24) connected to said bus;
said first and second buffer memories are connected to said music sound processor; and
music sound data are transferred from said memory controller (44) via said bus and said music sound processor to said first and second buffer memories.

6. An apparatus according to claim 3, wherein said plurality of buffer memories store left and right stereophonic music and sound data.

7. An apparatus according to any one of claims 1 to 6, further comprising said bus (12), and weherein:
said data transfer destination processor comprises a host processor (14) connected to said bus;
said data source processor comprises a music sound processor (24) connected to said bus;
said first and second buffer memories are connected to said music sound processor;
music sound data are transferred from said music sound processor via said bus to said memory controller (44); and
said music sound processor comprises means for switching one of said first and second buffer memories to the writing memory and the other of said two buffer memories to the reading memory, and controlling reading of data from and writing of data into said first and second buffer memories, when data are transferred to said memory controller (44).

8. A method for an apparatus to transfer data, said apparatus comprising a data transfer source processor (14) connected to a memory (16) through a bus (12), a memory controller (44) connected to said bus, first and second buffer memories (41, 42) which can be switched alternately between writing and reading memories, and a data transfer destination processor (24) connected to said bus;
the method comprising:
the data transfer source processor sending an instruction to start transferring data from said memory (16) to said data transfer destination processor in order to reproduce the data stored in the memory (16) and setting a data transfer cycle value representing the number of data transfer cycles to be performed;
said data transfer destination processor specifying the first buffer memory to be a writing memory into which data is transferred from the memory (16), and the second buffer memory to be a reading memory from which data is reproduced;
the data transfer destination processor controlling reading of data from and writing of data into said first and second buffer memories by writing a predetermined size of data into the writing memory and thereafter waiting until the reading memory becomes empty, and when the reading memory becomes empty, switching the first and second buffer memories between being the writing memory and the reading memory, such that said first and second buffer memories are switched alternately between being the writing memory and the reading memory as long as there remain data transfer cycles to be performed;
and said memory controller sending an interrupt signal to said data transfer source processor when the number of data transfer cycles that has been performed is equal to said data transfer cycle value.

9. The method of claim 8, further comprising:
transferring data from said memory (16) to said data transfer destination processor until the writing memory becomes full of the data;
thereafter, temporarily suspending transfer of the data;
reading data from the reading memory with the data transfer destination processor and outputting the read data from the data transfer destination processor to an output device (28);
when the reading memory become empty, switching the first and second buffer memories between the reading and writing memories, and canceling temporary suspension of the transfer of data; and
resuming the transfer of the data from said memory (16) to the new writing memory.

10. A method according to claim 8, wherein said data comprise music sound data.

## Patentansprüche

1. Vorrichtung zum Übertragen von Daten, die aufweist:
einen Quellprozessor der Datenübertragung (14), der über einen Bus (12) mit einem Speicher (16) verbunden ist;
ein Speichercontroller (44), der mit dem Bus verbunden ist;
erste und zweite Pufferspeicher (41, 42), die in ihrer Funktion abwechselnd als Schreib- und Lesespeicher gewechselt werden können; und
ein Zielprozessor der Datenübertragung (24), der mit dem Bus verbunden ist;
wobei die Vorrichtung so gestaltet ist, dass, wenn der Quellprozessor der Datenübertragung eine Anweisung zum Start der Übertragung von Daten aus dem Speicher (16) an den Zielprozessor der Datenübertragung sendet, um die im Speicher (16) gespeicherten Daten wiederzugeben, der Quellprozessor der Datenübertragung einen durchzuführenden Zykluswert für die Datenübertragung festlegt, der die Anzahl der durchzuführenden Datenübertragungszyklen enthält, und der Zielprozessor der Datenübertragung angibt, dass der erste Pufferspeicher ein Schreibspeicher sein soll, in den die Daten aus dem Speicher (16) übertragen werden, und der zweite Pufferspeicher ein Lesespeicher sein soll, aus dem die Daten wiedergegeben werden, und das Lesen der Daten aus und das Schreiben der Daten in den ersten und zweite Pufferspeicher durch Schreiben von Daten in einer bestimmten Größe in den Schreibspeicher steuert und danach wartet, bis der Lesespeicher leer wird und
wenn der Lesespeicher leer wird, für den ersten und zweiten Pufferspeicher Schreibspeicher und Lesespeicher tauscht, sodass für den ersten und zweiten Pufferspeicher abwechselnd Schreibspeicher und Lesespeicher gewechselt werden, so lange noch Datenübertragungszyklen auszuführen sind;
und wobei der Speichercontroller gestaltet ist, um ein Unterbrechungssignal an den Quellprozessor der Datenübertragung zu senden, wenn die Anzahl der Datenübertragungszyklen, die durchgeführt wurden, gleich dem Zykluswert für die Datenübertragung ist.

2. Vorrichtung gemäß Anspruch 1, wobei die Vorrichtung gestaltet ist um Daten aus dem Speicher (16) an den Zielprozessor der Datenübertragung zu übertragen, bis der Schreibspeicher voller Daten ist;
danach zeitweise die Übertragung von Daten auszusetzen;
Daten aus dem Lesespeicher mit dem Zielprozessor der Datenübertragung zu lesen und die gelesenen Daten aus dem Zielprozessor der Datenübertragung an ein Ausgabegerät (28) auszugeben;
wenn der Lesespeicher leer wird, den Lesespeicher und den Schreibspeicher für den ersten und zweiten Pufferspeicher zu wechseln und die temporäre Unterbrechung der Datenübertragung abzubrechen; und
die Datenübertragung aus dem Speicher (16) in den neuen Schreibspeicher wiederaufzunehmen.

3. Vorrichtung gemäß Anspruch 1 oder 2, wobei der erste und zweite Pufferspeicher eine Vielzahl an Pufferspeichern (41L), (41R), (42L), (42R) aufweisen.

4. Vorrichtung gemäß einem der Ansprüche 1 bis 3, wobei der Zielprozessor der Datenübertragung (24) einen Musikprozessor (24) aufweist, und die übertragenen Daten Musikdaten aufweisen.

5. Vorrichtung gemäß einem der Ansprüche 1 bis 3, die weiterhin einen Bus (12) aufweist, und wobei:
der Datenquellenprozessor einen Hostprozessor (14) aufweist, der mit dem Bus verbunden ist;
wobei der Zielprozessor der Datenübertragung einen Musikprozessor (24) aufweist, der mit dem Bus verbunden ist;
wobei der erste und zweite Pufferspeicher mit dem Musikprozessor verbunden sind;
und
Musikdaten vom Speichercontroller (44) über den Bus und den Musikprozessor an den ersten und zweiten Pufferspeicher übertragen werden.

6. Vorrichtung gemäß Anspruch 3, wobei die Vielzahl der Pufferspeicher stereophone Musik der linken und rechten Seite und Klangdaten speichern.

7. Vorrichtung gemäß einem der Ansprüche 1 bis 6, die weiterhin den Bus (12) aufweist, und wobei
der Zielprozessor der Datenübertragung einen Hostprozessor (14) aufweist, der mit dem Bus verbunden ist;
und der Datenquellenprozessor einen Musikprozessor (24) aufweist, der mit dem Bus verbunden ist;
wobei der erste und zweite Pufferspeicher mit dem Musikprozessor verbunden sind;
Musikdaten von dem Musikprozessor über den Bus an den Speichercontroller (44) übertragen werden; und
der Musikprozessor Mittel aufweist, um einen von dem ersten und dem zweiten Pufferspeicher auf den Schreibspeicher und den anderen der zwei Pufferspeicher auf den Lesespeicher umzuschalten und um das Lesen der Daten aus und das Schreiben der Daten in den ersten und zweiten Pufferspeicher zu steuern, wenn Daten an den Speichercontroller (44) übertragen werden.

8. Verfahren für eine Vorrichtung zum Übertragen von Daten,
wobei die Vorrichtung aufweist einen Quellprozessor der Datenübertragung (14), der über einen Bus (12) mit einem Speicher (16) verbunden ist, einen mit dem Bus verbundenen Speichercontroller (44), einen ersten und zweiten Pufferspeicher (41, 42), die abwechselnd zwischen der Funktion als Schreibspeicher und Lesespeicher gewechselt werden können, und einen Zielprozessor der Datenübertragung (24), der mit dem Bus verbunden ist;
Senden einer Anweisung zum Starten der Datenübertragung aus dem Speicher (16) des Quellprozessors zur Datenübertragung an den Zielprozessor der Datenübertragung, um die im Speicher (16) gespeicherten Daten wiederzugeben, und Festlegen eines Zykluswerts für die Datenübertragung, der die Anzahl der durchzuführenden Datenübertragungszyklen angibt;
wobei der Zielprozessor der Datenübertragung angibt, dass der erste Pufferspeicher ein Schreibspeicher sein soll, in den die Daten aus dem Speicher (16) übertragen werden, und der zweite Pufferspeicher ein Lesespeicher sein soll, aus dem die Daten wiedergegeben werden;
Steuern durch den Zielprozessor der Datenübertragung des Lesens der Daten aus und des Schreibens der Daten in den ersten und zweiten Pufferspeicher, indem er Daten in einer bestimmten Größe in den Schreibspeicher schreibt, und danach wartet, bis der Lesespeicher leer wird. Wenn der Lesespeicher leer wird, werden Schreibspeicher und Lesespeicher für den ersten und zweiten Pufferspeicher getauscht, sodass der erste und zweite Pufferspeicher abwechselnd als Schreibspeicher sowie als Lesespeicher fungieren, solange Datenübertragungszyklen durchgeführt werden müssen;
und wobei der Speichercontroller ein Unterbrechungssignal an den Quellprozessor der Datenübertragung sendet, wenn die Anzahl der Datenübertragungszyklen, die durchgeführt wurden, gleich dem Zykluswert für die Datenübertragung ist.

9. Übertragen von Daten aus dem Speicher (16) an den Zielprozessor der Datenübertragung, bis der Schreibspeicher voller Daten ist;
danach zeitweises Aussetzen der Datenübertragung;
Lesen der Daten aus dem Lesespeicher mit dem Zielprozessor der Datenübertragung und Ausgeben der gelesenen Daten aus dem Zielprozessor der Datenübertragung an ein Ausgabegerät (28);
wenn der Lesespeicher leer wird, Tauschen von Schreibspeicher und Lesespeicher für den ersten und zweiten Pufferspeicher und Abbrechen der temporären Unterbrechung der Datenübertragung; und
Wiederaufnehmen der Datenübertragung aus dem Speicher (16) in den neuen Schreibspeicher.

10. Verfahren gemäß Anspruch 8, wobei die Daten Musikdaten umfassen.

## Revendications

1. Appareil pour transférer des données, comprenant :
un processeur de source de transfert de données (14) connecté à une mémoire (16) par l'intermédiaire d'un bus (12) ;
un contrôleur de mémoire (44) connecté audit bus ;
des première et seconde mémoires tampons (41, 42) qui peuvent être commutées alternativement entre des mémoires d'écriture et de lecture ; et
un processeur de destination de transfert de données (24) connecté audit bus ;
l'appareil étant configuré de sorte que, lorsque le processeur de source de transfert de données envoie une instruction pour commencer à transférer des données de ladite mémoire (16) audit processeur de destination de transfert de données afin de reproduire les données stockées dans la mémoire (16), le processeur de source de transfert de données établisse une valeur de cycle de transfert de données représentant le nombre de cycles de transfert de données à effectuer, et ledit processeur de destination de transfert de données spécifie la première mémoire tampon comme étant une mémoire d'écriture dans laquelle des données sont transférées depuis la mémoire (16), et la seconde mémoire tampon comme étant une mémoire de lecture depuis laquelle des données sont reproduites, et contrôle la lecture de données depuis et l'écriture de données dans lesdites première et seconde mémoires tampons en écrivant une taille de données prédéterminée dans la mémoire d'écriture et attendant par la suite que la mémoire de lecture devienne vide, et lorsque la mémoire de lecture devient vide, commutant les première et seconde mémoires tampons entre le fait d'être la mémoire d'écriture et la mémoire de lecture, de sorte que lesdites première et seconde mémoires tampons soient commutées alternativement entre le fait d'être la mémoire d'écriture et la mémoire de lecture tant qu'il reste des cycles de transfert de données à effectuer ;
et dans lequel ledit contrôleur de mémoire est configuré pour envoyer un signal d'interruption audit processeur de source de transfert de données lorsque le nombre de cycles de transfert de données qui a été effectué est égal à ladite valeur de cycle de transfert de données.

2. Appareil selon la revendication 1, dans lequel l'appareil est configuré pour :
transférer des données de ladite mémoire (16) audit processeur de destination de transfert de données jusqu'à ce que la mémoire d'écriture devienne remplie des données ;
par la suite, suspendre temporairement le transfert des données ;
lire des données depuis la mémoire de lecture avec le processeur de destination de transfert de données et sortir les données lues depuis le processeur de destination de transfert de données vers un dispositif de sortie (28) ;
lorsque la mémoire de lecture devient vide, commuter les première et seconde mémoires tampons entre les mémoires de lecture et d'écriture, et annuler la suspension temporaire du transfert de données ; et
reprendre le transfert des données de ladite mémoire (16) à la nouvelle mémoire d'écriture.

3. Appareil selon la revendication 1 ou 2, dans lequel chacune des première et seconde mémoires tampons comprend une pluralité de mémoires tampons (41L), (41R), (42L), (42R).

4. Appareil selon l'une quelconque des revendications 1 à 3, dans lequel ledit processeur de destination de transfert de données (24) comprend un processeur de son musical (24), et lesdites données transférées comprennent des données de son musical.

5. Appareil selon l'une quelconque des revendications 1 à 3, comprenant en outre ledit bus (12), et dans lequel :
ledit processeur de source de données comprend un processeur hôte (14) connecté audit bus ;
ledit processeur de destination de transfert de données comprend un processeur de son musical (24) connecté audit bus ;
lesdites première et seconde mémoires tampons sont connectées audit processeur de son musical ; et
des données de son musical sont transférées dudit contrôleur de mémoire (44) via ledit bus et ledit processeur de son musical auxdites première et seconde mémoires tampons.

6. Appareil selon la revendication 3, dans lequel ladite pluralité de mémoires tampons stocke des données de musique et de son stéréophoniques gauches et droites.

7. Appareil selon l'une quelconque des revendications 1 à 6, comprenant en outre ledit bus (12), et dans lequel :
ledit processeur de destination de transfert de données comprend un processeur hôte (14) connecté audit bus ;
ledit processeur de source de données comprend un processeur de son musical (24) connecté audit bus ;
lesdites première et seconde mémoires tampons sont connectées audit processeur de son musical ;
des données de son musical sont transférées dudit processeur de son musical via ledit bus audit contrôleur de mémoire (44) ; et
ledit processeur de son musical comprend des moyens pour commuter l'une desdites première et seconde mémoires tampons vers la mémoire d'écriture et l'autre desdites deux mémoires tampons vers la mémoire de lecture, et contrôler la lecture de données depuis et l'écriture de données dans lesdites première et seconde mémoires tampons, lorsque des données sont transférées audit contrôleur de mémoire (44).

8. Procédé pour un appareil pour transférer des données, ledit appareil comprenant un processeur de source de transfert de données (14) connecté à une mémoire (16) par l'intermédiaire d'un bus (12), un contrôleur de mémoire (44) connecté audit bus, des première et seconde mémoires tampons (41, 42) qui peuvent être commutées alternativement entre des mémoires d'écriture et de lecture, et un processeur de destination de transfert de données (24) connecté audit bus ;
le procédé comprenant :
le processeur de source de transfert de données envoyant une instruction pour commencer à transférer des données de ladite mémoire (16) audit processeur de destination de transfert de données afin de reproduire les données stockées dans la mémoire (16) et établissant une valeur de cycle de transfert de données représentant le nombre de cycles de transfert de données à effectuer ;
ledit processeur de destination de transfert de données spécifiant la première mémoire tampon comme étant une mémoire d'écriture dans laquelle des données sont transférées depuis la mémoire (16), et la seconde mémoire tampon comme étant une mémoire de lecture depuis laquelle des données sont reproduites ;
le processeur de destination de transfert de données contrôlant la lecture de données depuis et l'écriture de données dans lesdites première et seconde mémoires tampons en écrivant une taille de données prédéterminée dans la mémoire d'écriture et attendant par la suite que la mémoire de lecture devienne vide, et lorsque la mémoire de lecture devient vide, commutant les première et seconde mémoires tampons entre le fait d'être la mémoire d'écriture et la mémoire de lecture, de sorte que lesdites première et seconde mémoires tampons soient commutées alternativement entre le fait d'être la mémoire d'écriture et la mémoire de lecture tant qu'il reste des cycles de transfert de données à effectuer ;
et ledit contrôleur de mémoire envoyant un signal d'interruption audit processeur de source de transfert de données lorsque le nombre de cycles de transfert de données qui a été effectué est égal à ladite valeur de cycle de transfert de données.

9. Procédé selon la revendication 8, comprenant en outre :
le transfert de données de ladite mémoire (16) audit processeur de destination de transfert de données jusqu'à ce que la mémoire d'écriture devienne remplie des données ;
par la suite, la suspension temporaire du transfert des données ;
la lecture de données depuis la mémoire de lecture avec le processeur de destination de transfert de données et la sortie des données lues depuis le processeur de destination de transfert de données vers un dispositif de sortie (28) ;
lorsque la mémoire de lecture devient vide, la commutation des première et seconde mémoires tampons entre les mémoires de lecture et d'écriture, et l'annulation de la suspension temporaire du transfert de données ; et
la reprise du transfert des données de ladite mémoire (16) à la nouvelle mémoire d'écriture.

10. Procédé selon la revendication 8, dans lequel lesdites données comprennent des données de son musical.
